# FASCICULE DE BREVET EUROPEEN

(11) **EP 1 103 362 B1**
(45) Date de publication et mention de la délivrance du brevet: **06.10.2004**
(21) Numéro de dépôt: 00123825.2
(22) Date de dépôt: 02.11.2000
(51) Int. Cl.: B29C 33/48, B29D 30/06

(54) **Moule pour le moulage de la bande de roulement d'un pneu**
Formwerkzeug zum Formen einer Reifenlauffläche
Mould for moulding a tyre tread

(30) Priorité: 25.11.1999 FR 9914956
(43) Date de publication de la demande: 30.05.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Lagnier, Alain, 63540 Romagnat (FR); Merino Lopez, José, 63200 Riom (FR); Lavialle, Georges, 63160 Billom (FR)
(74) Mandataire: Diernaz, Christian

(56) Documents cités:
- EP-A- 0 925 907
- DE-A- 4 130 143
- FR-A- 2 759 323
- US-A- 1 733 064

## Description

L'invention concerne les moules pour le moulage des sculptures des bandes de roulement pour pneumatiques et en particulier les moules pour mouler dans un motif de sculpture au moins une découpure dont une partie est située sous la surface de roulement et débouche sur au moins une face latérale dudit motif de sculpture.

Pour conférer à une bande de roulement des performances d'adhérence, il est connu de former, sur la surface de ladite bande de roulement destinée à être en contact avec le sol pendant le roulage, une sculpture formée de motifs en relief. Ces motifs sont délimités des découpures (entailles ou rainures de largeur supérieure à **2** mm) réalisées par moulage au moyen d'éléments de relief portés par un moule destiné en outre à vulcaniser les mélanges de caoutchouc composant ladite bande. De plus, il est connu de former pendant la phase de moulage ou bien par découpe après ladite phase de moulage, une pluralité d'incisions (découpures de largeur moyenne inférieure à **2** mm) dans les motifs en relief de la sculpture de façon à créer un grand nombre d'arêtes de gomme pour venir couper le film d'eau éventuellement présent dans la zone de contact.

L'obtention d'une bonne performance d'adhérence du pneumatique sur un sol mouillé requiert la réalisation d'un très grand nombre de découpures (rainures et/ou incisions) ce qui est incompatible avec un maintien d'un niveau de rigidité des motifs de relief d'une sculpture de bande de roulement suffisant pour résister aux efforts exercés par le sol dans le contact. C'est la raison pour laquelle la demanderesse a proposé dans sa demande **WO 98/35842** de réaliser une pluralité de découpures pourvues sur les parois délimitant chacune desdites découpures d'au moins un élément de liaison en gomme reliant lesdites parois entre elles. Un mode de réalisation a été proposé consistant à incorporer dans le pneumatique à l'état non vulcanisé des intercalaires pourvus d'au moins un trou pour laisser passer le mélange de gomme pendant l'opération de moulage et former ainsi au moins un élément de liaison. Un inconvénient de cette méthode réside dans le fait que l'incision après moulage et vulcanisation reste remplie avec le matériau composant l'intercalaire. Il n'y a donc pas de possibilité d'évacuation de l'eau captée pendant le roulage sur sol mouillé.

Pour minimiser les risques de formation de fissure en fond d'incision, il est connu, par exemple dans le brevet **US 2,121,955,** de mouler un canal transversal sous la surface de roulement, ce canal étant situé dans le prolongement de chaque incision. Une forme de réalisation proposée consiste à mouler chaque canal au moyen d'une aiguille pendant le moulage du pneumatique introduite transversalement et sous la bande de roulement à mouler et de réaliser ultérieurement les incisions en reliant chaque incision à un canal.

Une autre forme de réalisation consiste à employer des éléments moulants formés de deux parties assemblées, une partie moulant une incision et une autre partie moulant un canal dans le prolongement de l'incision. Toutefois, dans ce dernier cas, l'incision doit elle même déboucher latéralement pour permettre le démoulage de ces éléments moulants.

Le besoin s'est fait sentir de pouvoir disposer d'un moyen de moulage d'une sculpture de bande de roulement dont au moins certains motifs de relief délimités par des faces latérales sont pourvus de découpures (rainures et/ou incisions) débouchant au moins partiellement sur au moins une desdites faces latérales pour mettre en communication lesdites découpures avec au moins une découpure adjacente audits motifs, lesdites découpures ayant en outre leurs parois principales en vis-à-vis reliées par au moins un élément de liaison en mélange de caoutchouc.

Un objectif de la présente invention est de proposer un moule pour mouler un pneumatique comportant une bande de roulement pourvue d'une sculpture formée de motifs de relief délimités par des découpures, chaque motif de relief comprenant au moins deux faces latérales séparées dans la direction axiale du pneumatique et une face de contact constituant une partie de la surface de roulement de ladite bande.

Au moins un motif de relief comporte une découpure débouchant à la fois sur la surface de roulement de la bande à l'état neuf et sur l'une au moins des faces latérales dudit motif, les parois principales en vis-à-vis de cette découpure étant reliées par au moins un élément de liaison en mélange de caoutchouc dont le contour de la section d'intersection avec l'une au moins des parois principales en vis-à-vis ne touche pas le fond de la découpure.

Le moule de pneumatique selon l'invention, destiné au moulage d'un pneumatique pourvu d'une bande de roulement en mélange de caoutchouc et présentant une surface de roulement et deux faces latérales délimitant axialement ladite bande, comporte dans la configuration de moulage :
- une couronne périphérique formée de secteurs présentant une surface de moulage destinée à mouler au moins la surface de roulement de la bande de roulement, chaque secteur pouvant être animé d'un mouvement de rapprochement ou d'éloignement par rapport à l'axe du moule,
- deux coquilles concentriques à la couronne périphérique présentant chacune une surface de moulage destinée à mouler une face latérale de la bande, ces coquilles pouvant être animées d'un mouvement dans la direction de l'axe du moule tendant à les rapprocher ou à les éloigner l'une de l'autre,
- au moins un premier élément de relief faisant saillie sur la surface de moulage d'au moins une desdites coquilles pour le moulage d'un canal sous la surface de roulement de la bande de roulement,
- au moins un deuxième élément de relief faisant saillie sur la surface de moulage d'un secteur de la couronne pour le moulage d'une découpure dans la bande.

Ce moule est, dans la position de moulage, caractérisé en ce qu'au moins un premier élément de relief porté par une coquille coopère avec au moins un deuxième élément de relief porté par un secteur pour former un élément moulant destiné à mouler dans au moins un motif de relief de la sculpture une découpure débouchant sur la surface de roulement de la bande de roulement, ladite découpure se prolongeant à l'intérieur de la bande par un canal débouchant sur au moins une face latérale du motif de relief considéré, lesdits premier et deuxième éléments de relief étant fonctionnellement agencés pour délimiter au moins un orifice entièrement délimité par lesdits premier et deuxième éléments de relief. Chaque orifice ainsi formé par le moule dans la configuration de moulage est destiné à laisser passer le mélange de caoutchouc pendant le moulage pour mouler un élément de liaison reliant les parois principales délimitant la découpure moulée avec ledit élément moulant.

Un moule selon l'invention permet un moulage aisé d'une découpure débouchant sur la surface de roulement à l'état neuf d'une bande de roulement et, par exemple, sur les faces latérales de ladite bande ou bien encore le moulage d'une découpure sur un motif de relief n'ayant pas de face latérale commune avec les faces latérales de la bande (dans ce cas la découpure débouche sous la surface de roulement sur au moins une des faces latérales dudit motif de relief pour mettre en communication ladite découpure avec une autre découpure adjacente audit motif).

En pratique le démoulage, c'est-à-dire l'opération consistant à extraire la bande de roulement moulée du moule après vulcanisation, ne pose pas de problème particulier. De manière avantageuse, il peut être procédé à l'ouverture simultanée des coquilles et des secteurs sans aucun risque de rupture des éléments de liaison moulés. Pour certaines géométries des premiers éléments de relief, on procède préférentiellement au démoulage en deux temps, en écartant dans un premier temps radialement les différents secteurs portant les deuxièmes éléments de relief et en écartant dans un second temps les coquilles l'une de l'autre dans la direction axiale pour extraire les premiers éléments de relief portés par lesdites coquilles afin achever le démoulage de la bande de roulement (on évite ainsi que ces premiers éléments soient gênés par les deuxièmes éléments dans leur mouvement).

Les premiers éléments de relief peuvent avoir des géométries rectilignes ou bien courbes selon la forme du canal désirée, par exemple pour suivre au mieux la courbure transversale des armatures de renforcement du sommet d'un pneumatique. Dans le cas d'un premier élément de relief ayant une géométrie courbe de forte courbure (c'est-à-dire ne s'étendant pas essentiellement dans la direction transversale de la bande), la coquille portant ledit élément de relief peut être avantageusement montée pivotante autour de son axe de symétrie afin de faciliter l'extraction dudit élément de relief.

Une autre forme de montage des premiers éléments de relief sur l'une des coquilles consiste à prévoir sur cette coquille un nombre approprié de trous, correspondant au nombre de premiers éléments, pour introduire ces premiers éléments afin qu'ils fassent saillie sur la surface de moulage de ladite coquille.

Un même premier élément de relief porté par une coquille peut, en outre, être prévu pour coopérer avec plusieurs deuxième éléments de relief portés par un ou plusieurs secteurs de couronne, lesdits deuxième éléments étant fonctionnellement agencés avec ledit premier élément pour mouler des découpures dont les parois sont reliées par au moins un élément de liaison en gomme.

Ce qui vient d'être décrit pour un moule de pneumatique s'applique de façon semblable au moulage d'une bande de roulement seule, que cette bande ait ou non la forme d'un anneau fermé ou bien celle d'une bande plate (la direction de sa largeur correspondant à la direction transversale une fois ladite bande mise en place sur un pneumatique).

Dans ce but, il est proposé un moule pour le moulage d'une bande de roulement comportant une face externe supérieure destinée à former une surface de roulement prolongée latéralement par des faces latérales, ces faces latérales étant en outre reliées par une face interne. Ce moule comprend, en position de moulage, :
- au moins deux parties de moule délimitant un volume fermé correspondant au volume de la bande à mouler, lesdites parties de moules comportant des surfaces de moulage moulant les faces externe, interne et latérales de la bande,
- au moins un premier élément de relief, destiné à mouler un canal débouchant sur au moins une face latérale de la bande, coopérant avec au moins un deuxième élément de relief destiné à mouler une incision débouchant sur au moins une des surfaces interne ou externe de la bande, pour mouler une découpure unique, lesdits premier et deuxième éléments étant fonctionnellement agencés pour délimiter en totalité au moins un orifice destiné à laisser passer le mélange de caoutchouc constituant la bande de roulement pendant l'opération de moulage de ladite bande.

Une variante de ce moule consiste en ce qu'un premier élément de relief moulant un canal débouchant au moins sur une face latérale d'une bande de roulement coopère avec au moins un deuxième élément de relief moulant une incision débouchant sur la surface externe et au moins un troisième élément de relief moulant une incision débouchant sur la surface interne. Dans cette variante, les incisions moulées par les deuxième et troisième éléments de relief sont connectées entre elles par l'intermédiaire du canal moulé par le premier élément de relief. Dans ce cas d'espèce, au moins un des deuxième ou troisième élément de relief est fonctionnellement agencé avec le premier élément de relief pour délimiter en totalité au moins un orifice destiné à laisser passer le mélange de caoutchouc pour former un pont de liaison reliant les parois de la découpure ainsi moulée.

L'invention est maintenant décrite à l'aide du dessin de deux réalisations, donnés uniquement à titre d'exemples, et accompagnés de :
- la figure **1** montrant, dans la position de moulage, un premier élément de relief coopérant avec un deuxième élément de relief pour mouler une découpure pourvue de deux ponts de liaison;
- la figure **2** montrant une variante de réalisation d'un premier élément de relief moulant un canal;
- la figure **3** montrant une vue perspective d'un bloc de sculpture situé à l'épaule d'une bande de roulement comportant une découpure moulée avec un élément moulant selon l'invention;
- la figure **4** montrant une coupe effectuée selon la ligne **III-III** de la figure **3** ;
- la figure **5** montrant une section d'un moule selon l'invention destiné au moulage d'une bande de gomme.

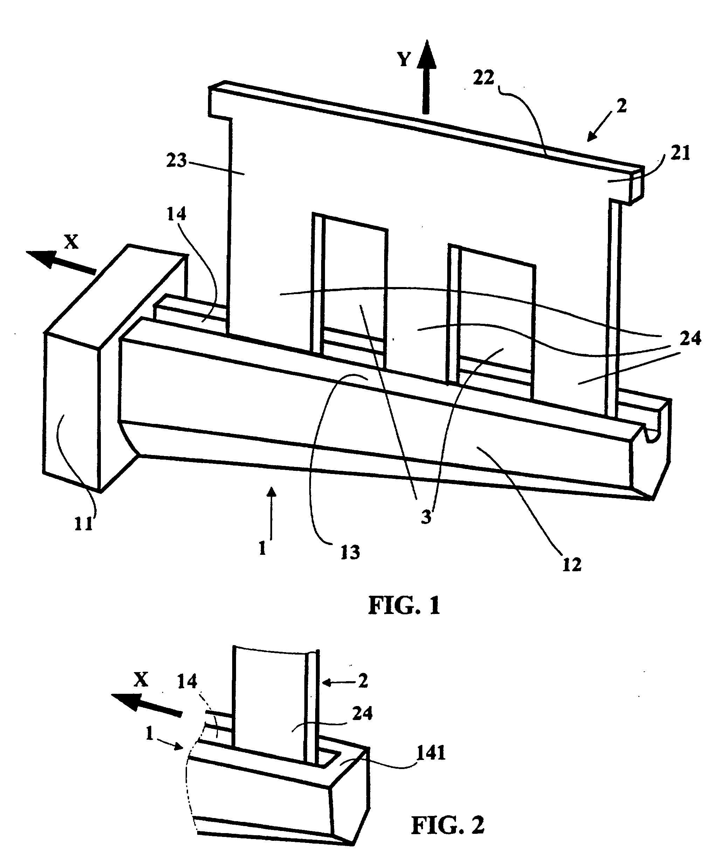

Sur la figure **1**, on distingue, dans la position de moulage, un premier élément de relief **1** coopérant avec un deuxième élément de relief **2** pour former un élément moulant pour mouler une même découpure. Sur cette figure **1**, ne sont pas représentés les éléments constitutifs du moule portant lesdits éléments de relief. Le premier élément **1** est constitué d'une embase **11** sur laquelle est montée une lame **12** de profil moyen sensiblement rectiligne dans la direction perpendiculaire à l'embase **11** et dont une surface supérieure **13** est pourvue sur toute sa longueur d'une rainure **14**. L'élément de relief **1** comporte une section transversale d'aire décroissante en allant de l'embase **11** jusqu'à son extrémité opposée de manière à mouler un canal ayant une section variable. L'embase **11** est prévue pour être montée dans un logement prévu sur la face de moulage d'une coquille (non représentée sur cette figure) destinée à mouler une surface latérale d'une bande de roulement prolongée par un flanc d'un pneumatique.

Le deuxième élément de relief **2** a la forme d'une lame mince sensiblement plane comporte une partie moulante **21** prolongée par une partie d'ancrage **22** destinée à être fixée sur un secteur de moule (non représenté) moulant une partie de la surface de roulement d'une bande de roulement d'un pneumatique. La partie moulante **21** comporte une partie supérieure **23**, prolongeant la partie d'ancrage **22** et elle même prolongée radialement vers l'axe du moule par trois lames **24** sensiblement de même longueur.

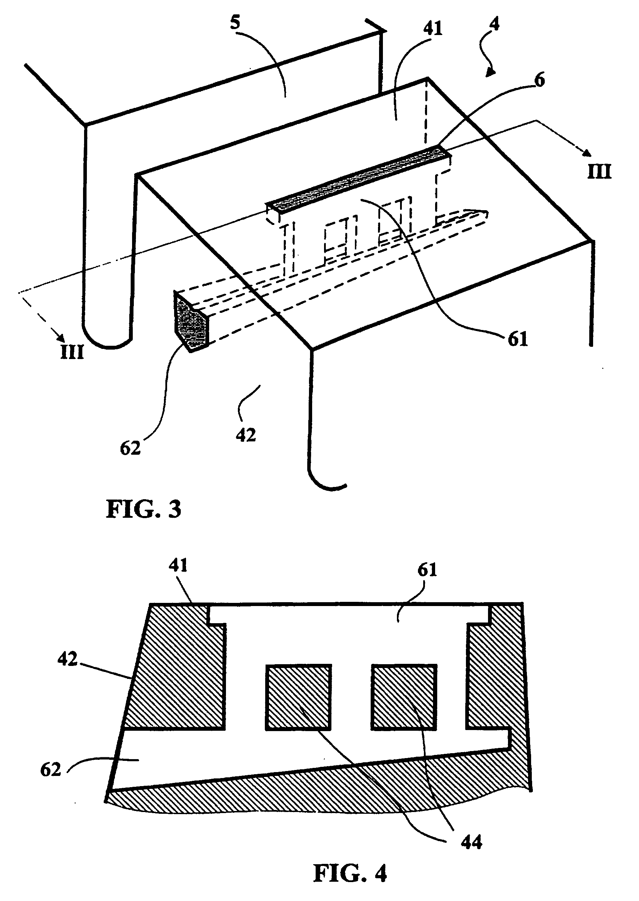

Dans la position de moulage représentée, les premier et deuxième éléments de relief coopèrent pour former un élément moulant destiné à mouler une découpure unique débouchant à la fois sur la surface de roulement de la bande de roulement et sur l'un des bords latéraux de ladite bande (comme montré sur la figure **3**), et d'autre part pour délimiter deux orifices **3** destinés à laisser passer le mélange de caoutchouc pendant le moulage.

Dans la position de moulage représentée, les trois lames **24** du deuxième élément de relief **2** ont leurs extrémités opposées à la partie d'ancrage **23** engagées dans la rainure **14** prévue sur la face **13** du premier élément de relief **1**, la largeur de cette rainure **14** étant préférentiellement choisie pour permettre l'introduction des extrémités des lames **24** avec un jeu approprié. De cette façon, il est possible de s'assurer que les films de mélanges de caoutchouc qui pourraient avoir été formés pendant le moulage entre premier et deuxième éléments de relief seront cassés pendant les déplacements desdits éléments au moment du démoulage du pneumatique. En outre, cette disposition permet une meilleure coopération entre les deux éléments de relief pendant l'opération de moulage et confère à l'assemblage desdits éléments une rigidité suffisante pendant le moulage assurant ainsi le moulage d'une découpure unique. Cette rainure peut également servir de guide de mise en place à l'un des éléments de relief par rapport à l'autre au moment de la fermeture du moule pour atteindre la position de moulage.

Après avoir moulé et vulcanisé un pneumatique, on procède au démoulage en déplaçant chaque secteur radialement vers l'extérieur (dans la direction de la flèche **Y** sensiblement perpendiculaire à la direction **X** représentant la direction axiale)pour sortir le deuxième élément **2** de la bande puis en écartant axialement la coquille portant le premier élément **1** par rapport à l'autre coquille (dans la direction de la flèche repérée **X**); dans le cas d'espèce, les deux mouvements peuvent indifféremment être réalisés successivement ou en même temps.

Dans une variante non représentée, on prévoit qu'en outre un élément de relief faisant saillie sur la face de moulage d'un secteur du moule comporte un passage pour permettre la mise en place par coulissement d'un premier élément de relief porté par une coquille; cette disposition permet audit premier élément de résister aux efforts exercés par le mélange de caoutchouc cru (non vulcanisé) au moment de la pénétration dudit premier élément dans le mélange.

On peut prévoir que les premiers éléments de relief présentent une courbure de manière à mouler un canal dont la direction moyenne à l'intérieur de la bande de roulement fait un angle non nul avec la direction axiale du pneumatique. Dans cette variante, le deuxième élément de relief coopérant avec ce premier élément de relief est bien entendu adapté pour délimiter avec ce premier élément au moins un orifice.

En outre, pour faciliter la rupture d'éventuel film de gomme moulé dans le jeu existant dans la rainure **14** entre les lames **24** du deuxième élément de relief **2** et le premier élément de relief **1**, il est préférable que ladite rainure **14** ne s'étende pas sur la totalité de la longueur dudit premier élément de relief **1**. Comme cela est montré sur la figure **2**, la partie d'extrémité **141** de l'élément de relief **1** est dépourvue de rainure, entraînant la cassure des films de gomme par ladite partie **141** au cours du mouvement de démoulage dudit élément de relief suivant la direction **X**.

La figure **3** montre une vue perspective partielle de l'épaule d'une bande de roulement, à l'état neuf, comportant une pluralité de blocs **4** séparés les uns des autres dans la direction circonférentielle par des rainures **5** d'orientation transversale. Chaque bloc **4** est pourvu d'une découpure **6** moulée avec un élément moulant selon l'invention et montré à la figure **1**, ladite découpure **6** étant composée d'une incision **61** débouchant sur la surface de contact **41** du bloc à l'état neuf et d'un canal **62** prolongeant radialement vers l'intérieur ladite incision **61** sous la surface de roulement jusqu'à déboucher sur une face latérale **42** du bloc **4**. Les parois de gomme délimitant la découpure **6** obtenue par moulage sont reliées mécaniquement par deux ponts de gomme dont les sections sur lesdites parois ont des géométries sensiblement rectangulaires (visibles sur la figure **4**).

La figure **4** montre une coupe selon la ligne **III-III** de la figure **3**; sur cette figure **4** , on distingue la trace de la face **42** axialement extérieur du bloc **4** pourvu d'une découpure **6** formée de l'incision **61** débouchant sur la surface de roulement **41** prolongée par le canal **62** débouchant sur la face latérale **42** de la bande. On distingue également les intersections **44** des ponts de liaison des parois principales de la découpure avec l'une desdites parois.

Une variante de réalisation consiste à employer un même premier élément de relief pour mouler un canal dans le bord d'une bande de roulement et également dans un motif de sculpture axialement à l'intérieur dudit bord (c'est-à-dire séparé dudit bord par une découpure sensiblement circonférentielle).

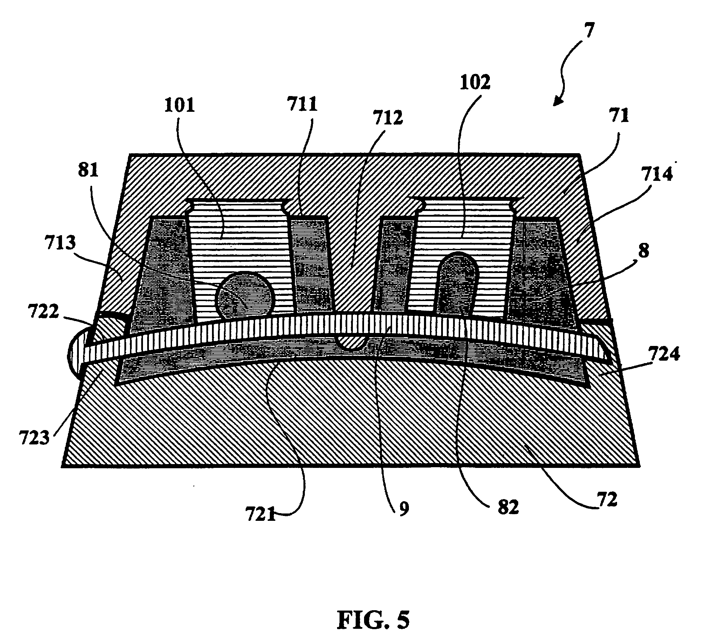

La figure **5** représente partiellement une coupe transversale d'un moule **7** pour mouler une bande de gomme **8** destinée, par exemple, à être placée sur un pneumatique neuf ou un pneumatique à rénover, ou encore à être utilisée pour la fabrication d'une chenille. Le moule représenté est constitué de deux parties formant une première matrice **71** et une deuxième matrice **72** destinée à venir en contact l'une sur l'autre lorsque le moule est fermé en position de moulage de ladite bande, comme représenté sur cette figure **4**. Chaque matrice **71**, **72** est pourvue d'une surface de moulage, respectivement **711** et **721** pour mouler les surfaces extérieure, intérieure et latérales de ladite bande; les surfaces de moulage de chaque matrice délimitent, lorsque le moule est fermé, un volume interne de moulage égal au volume de la bande à mouler.

En outre, la matrice supérieure **71** est pourvue d'un élément en relief ayant la forme d'une nervure **712** sur sa surface de moulage **711** pour mouler une rainure dans la bande, cette rainure ayant une profondeur sensiblement inférieure à l'épaisseur de la bande et étant orientée selon la direction longitudinale de la bande.

Chaque matrice **71** et **72** comporte des parties latérales respectivement **713**, **714** et **723**, **724** en appui deux à deux pour fermer complètement le moule **7** dans la configuration de moulage; ces parties latérales comportent des surfaces de moulage pour le moulage des parties latérales d'une bande de roulement.

L'une des parties latérales **723** de la matrice inférieure **72** comporte au moins un orifice **722** pour le passage d'un premier élément de relief **9** de forme géométrique courbe dans le plan de la figure; cet élément de relief **9** s'étend sur toute la largeur de la bande **8** pour venir en appui dans un logement prévu sur l'autre partie latérale **724** de la même matrice **72**et est destiné à mouler un canal de section sensiblement circulaire à l'intérieur de la bande **8**. Ce même élément passe dans un orifice réalisé dans la nervure **712** portée par la matrice supérieure **71**, ce qui permet de renforcer la rigidité à la flexion dudit élément soumis aux efforts de moulage tout en assurant son guidage.

Deux lamelles **101**, **102** sont ancrées dans la matrice **71** de façon à faire saillie sur la surface de moulage de ladite matrice pour mouler deux incisions dans la bande de gomme **8**. Ces deux lamelles **101**, **102** sont agencées de façon à venir en appui sur le premier élément de relief **9** dans la configuration de moulage et à délimiter chacune avec ledit élément de relief un orifice, respectivement **81**, **82** pour le passage de la gomme pendant le moulage de la bande **8**.

Pour des raisons pratiques, chaque matrice **71**, **72** peut être constituée d'une pluralité de matrices élémentaires assemblées les unes avec les autres de manière connue en soi. Le moule selon l'invention peut également être constitué d'une pluralité de matrices élémentaires pour former deux matrices annulaires concentriques, la première matrice étant placée radialement à l'intérieur de la seconde pour mouler une bande de gomme sous la forme d'une bande annulaire fermée.

Une variante consiste à réaliser en lieu et place d'un orifice traversant la nervure **712**, une sorte d'entaille sur la nervure **712** pour le guidage de l'élément de relief **9** et dans laquelle cet élément vient s'appuyer contre ladite nervure; cette dernière variante présentant l'avantage de permettre le démoulage en ouvrant la matrice supérieure dans un premier temps suivi de l'extraction de l'élément de relief **9**.

## Revendications

1. Moule pour le moulage d'un pneumatique pourvu d'une bande de roulement en mélange de caoutchouc, cette bande présentant une surface de roulement et deux faces latérales délimitant axialement ladite bande, ledit moule comportant dans la configuration de moulage :
• une couronne périphérique formée de secteurs présentant une surface de moulage destinée à mouler au moins la surface de roulement de la bande de roulement, chaque secteur pouvant être animé d'un mouvement de rapprochement ou d'éloignement par rapport à l'axe du moule,
• deux coquilles concentriques à la couronne périphérique présentant chacune une surface de moulage destinée à mouler une face latérale de la bande, ces coquilles pouvant être animées d'un mouvement dans la direction de l'axe du moule tendant à les rapprocher ou à les éloigner l'une de l'autre,
• au moins un premier élément de relief (**1**) faisant saillie sur la surface de moulage d'au moins une desdites coquilles pour le moulage d'un canal sous la surface de roulement de la bande de roulement,
• au moins un deuxième élément de relief (**2**) faisant saillie sur la surface de moulage d'un secteur de la couronne pour le moulage d'une découpure dans la bande,
ce moule est **caractérisé en ce que**, dans la configuration de moulage, au moins un premier élément de relief (**1**) porté par une coquille coopère avec au moins un deuxième élément de relief (**2**) porté par un secteur pour former un élément moulant destiné à mouler dans au moins un motif de relief de la sculpture une découpure débouchant sur la surface de roulement de la bande de roulement, ladite découpure se prolongeant à l'intérieur de la bande par un canal débouchant sur au moins une face latérale du motif de relief considéré, lesdits premier et deuxième éléments de relief étant fonctionnellement agencés pour délimiter au moins un orifice (**3**) entièrement délimité par lesdits premier et deuxième éléments de relief, chaque orifice ainsi formé étant destiné à laisser passer le mélange de caoutchouc pendant le moulage pour mouler un élément de liaison reliant les parois principales délimitant la découpure moulée avec ledit élément moulant.

2. Moule selon la revendication **1 caractérisé en ce qu'**un premier élément de relief (**1**) porté par une coquille est pourvu d'une rainure (**14**) destinée à recevoir une extrémité d'au moins un deuxième élément de relief (**2**) porté par un secteur pour assurer une meilleure coopération entre lesdits deux éléments pendant l'opération de moulage.

3. Moule selon l'une des revendications **1** à **2 caractérisé en ce que** l'une au moins des coquilles est formée de deux anneaux concentriques assemblés de façon à ce que l'anneau portant les premiers éléments de relief (**1**) puisse tourner par rapport à l'autre anneau pour faciliter le démoulage du pneumatique vulcanisé.

4. Moule selon l'une des revendications **1** à **3 caractérisé en ce que** l'une au moins des coquilles portant des premiers éléments de relief (**1**) est pourvue de trous destinés à permettre l'introduction desdits éléments de relief de façon à ce que ceux-ci fassent saillie sur la surface de moulage de ladite coquille.

5. Moule pour le moulage d'une bande de roulement comportant une face externe destinée à former une surface de contact, prolongée latéralement par des faces latérales, ces faces latérales étant en outre reliées par une face interne, ce moule comprend, en position de moulage :
• au moins deux parties de moule délimitant un volume fermé correspondant au volume de la bande à mouler, lesdites parties de moules comportant des surfaces de moulage moulant les faces externe, interne et latérales de la bande,
• au moins un premier élément de relief, destiné à mouler un canal débouchant sur au moins une face latérale de la bande, coopérant avec au moins un deuxième élément de relief destiné à mouler une incision débouchant sur au moins une des surfaces interne ou externe de la bande, pour mouler une découpure unique, lesdits premier et deuxième éléments étant fonctionnellement agencés pour délimiter en totalité au moins un orifice destiné à laisser passer le mélange de caoutchouc constituant la bande de roulement pendant l'opération de moulage de ladite bande.

6. Moule selon la revendication **5 caractérisé en ce qu'**un premier élément de relief moulant un canal débouchant au moins sur une face latérale d'une bande de roulement coopère avec au moins un deuxième élément de relief moulant une incision débouchant sur la surface externe de la bande et au moins un troisième élément de relief moulant une incision débouchant sur la surface interne pour mouler une découpure unique, les incisions moulées par les deuxième et troisième éléments de relief étant connectées entre elles par l'intermédiaire du canal, et **en ce qu'**en outre, au moins un des deuxième ou troisième élément de relief est fonctionnellement agencé avec le premier élément de relief pour délimiter en totalité au moins un orifice destiné à laisser passer le mélange de caoutchouc formant un pont de liaison reliant les parois de la découpure.

## Claims

1. A mould for moulding a tyre provided with a tread of rubber mix, this tread having a running surface and two lateral faces axially defining said tread, said mould comprising in the moulding configuration:
• a peripheral ring formed of sectors having a moulding surface intended to mould at least the running surface of the tread, each sector being able to be moved in a movement towards or away from the axis of the mould,
• two shells concentric to the peripheral ring, each having a moulding surface intended to mould a lateral face of the tread, these shells being able to be moved in a movement in the direction of the axis of the mould which tends to move them towards or away from each other,
• at least one first element in relief (1) projecting from the moulding surface of at least one of said shells for moulding a channel beneath the running surface of the tread,
• at least one second element in relief (2) projecting from the moulding surface of a sector of the ring for moulding a cutout in the tread,
this mould is **characterised in that**, in the moulding configuration, at least one first element in relief (1) borne by a shell cooperates with at least one second element in relief (2) borne by a sector to form a moulding element intended to mould in at least one motif in relief of the tread pattern a cutout opening on to the running surface of the tread, said cutout being extended to the inside of the tread by a channel opening on to at least one lateral face of the motif in relief in question, said first and second elements in relief being functionally arranged to define at least one orifice (3) which is entirely defined by said first and second elements in relief, each orifice thus formed being intended to allow the rubber mix to pass during moulding for moulding a connecting element connecting the main walls defining the cutout moulded with said moulding element.

2. A mould according to Claim 1, **characterised in that** a first element in relief (1) borne by a shell is provided with a groove (14) intended to receive an end of at least one second element in relief (2) borne by a sector for ensuring better cooperation between said two elements during the moulding operation.

3. A mould according to one of Claims 1 to 2, **characterised in that** at least one of the shells is formed of two concentric rings assembled such that the ring bearing the first elements in relief (1) can rotate relative to the other ring to facilitate demoulding of the vulcanised tyre.

4. A mould according to one of Claims 1 to 3, **characterised in that** at least one of the shells bearing first elements in relief (1) is provided with holes intended to allow introduction of said elements in relief so that they project from the moulding surface of said shell.

5. A mould for moulding a tread comprising an outer face intended to form a contact surface, extended laterally by lateral faces, these lateral faces furthermore being connected by an inner face, this mould comprising, in the moulding position:
• at least two mould parts defining a closed volume corresponding to the volume of the tread to be moulded, said mould parts comprising moulding surfaces moulding the outer, inner and lateral faces of the tread,
• at least one first element in relief, intended to mould a channel opening on to at least one lateral face of the tread, cooperating with at least one second element in relief intended to mould an incision which opens on to at least one of the inner or outer surfaces of the tread, for moulding a single cutout, said first and second elements being functionally arranged to define in total at least one orifice intended to allow the rubber mix forming the tread to pass through during the operation of moulding said tread.

6. A mould according to Claim 5, **characterised in that** one first element in relief moulding a channel opening at least on to one lateral face of a tread cooperates with at least one second element in relief moulding an incision which opens on to the outer surface of the tread and at least one third element in relief moulding an incision which opens on to the inner surface to mould a single cutout, the incisions moulded by the second and third elements in relief being connected together by means of the channel, and **in that**, furthermore, at least one of the second or third elements in relief is functionally arranged with the first element in relief to define in total at least one orifice intended to allow the rubber mix to pass to form a connecting bridge connecting the walls of the cutout.

## Patentansprüche

1. Formwerkzeug zum Formen eines Luftreifens, der einen Laufstreifen aus einer Kautschukmischung aufweist, wobei der Laufstreifen eine Lauffläche und zwei Seitenflächen besitzt, die den Laufstreifen in axialer Richtung begrenzen, wobei die Form im formbereiten Zustand aufweist:
- einen äußeren Ring, der aus Segmenten besteht und eine Formoberfläche aufweist, die dazu vorgesehen ist, zumindest die Lauffläche des Laufstreifens zu formen, wobei jedes Segment in Bezug auf die Achse der Form vor- und zurückbewegt werden kann,
- zwei mit dem äußeren Ring konzentrische Schalen, die jeweils eine Formoberfläche aufweisen, die dazu vorgesehen ist, eine Seitenfläche des Laufstreifens zu bilden, wobei die Schalen in der Richtung der Achse der Form bewegt werden können, wodurch sie letztlich aufeinander zuzubewegt oder voneinander entfernt werden können,
- mindestens ein erstes Reliefelement (1), das über die Formoberfläche mindestens einer Schale hinausragt, um unter der Lauffläche des Laufstreifens einen Kanal auszubilden, und
- mindestens ein zweites Reliefelement (2), das über die Formoberfläche eines Segments des äußeren Rings herausragt, um einen Ausschnitt in dem Streifen zu formen,
wobei die Form **dadurch gekennzeichnet ist, dass** im formbereiten Zustand mindestens ein erstes Reliefelement (1), das sich an einer Schale befindet, mit mindestens einem zweiten Reliefelement (2) zusammenwirkt, das von einem Segment getragen wird, wodurch ein Formelement gebildet wird, das dazu vorgesehen ist, in mindestens einem hervorstehenden Profilelement einen Ausschnitt zu bilden, der an der Lauffläche des Laufstreifens mündet, wobei der Ausschnitt sich im Inneren des Laufstreifens durch einen Kanal fortsetzt, der an mindestens einer Seitenfläche des jeweiligen hervorstehenden Elements mündet, wobei das erste Reliefelement und das zweite Reliefelement funktionell so angeordnet sind, dass mindestens eine Öffnung 3 gebildet wird, die von dem ersten Reliefelement und dem zweiten Reliefelement vollständig begrenzt wird, wobei jede auf diese Weise gebildete Öffnung dazu dient, während des Formens die Kautschukmischung hindurchtreten zu lassen, um ein Verbindungselement auszubilden, das die Hauptwände verbindet, die den mit dem Formelement gebildeten Ausschnitt begrenzen.

2. Formwerkzeug nach Anspruch 1, **dadurch gekennzeichnet, dass** ein erstes Reliefelement ( 1 ) an einer Schale mit einer Rille (14) versehen ist, die dazu vorgesehen ist, das Endstück mindestens eines zweiten Reliefelements (2) aufzunehmen, das sich an einem Segment befindet, um ein besseres Zusammenwirken der beiden Elemente beim Formvorgang zu gewährleisten.

3. Formwerkzeug nach einem der Ansprüche 1 bis 2, **dadurch gekennzeichnet, dass** mindestens eine Schale aus zwei konzentrischen Ringen besteht, die so montiert sind, dass der Ring mit den ersten Formelementen ( 1 ) in Bezug auf den anderen Ring schwenken kann, um das Entformen des vulkanisierten Luftreifens zu erleichtern.

4. Formwerkzeug nach einem der Ansprüche 1 bis 3, **dadurch gekennzeichnet, dass** mindestens eine Schale, die die Reliefelemente (1) trägt, mit Löchern versehen ist, durch die die Reliefelemente eingeführt werden und dadurch aus der Formfläche der Schale herausragen können.

5. Formwerkzeug zum Formen eines Laufstreifens mit einer äußeren Fläche, die eine Berührungsfläche bilden soll, die seitlich durch die Seitenflächen fortgesetzt wird, wobei die Seitenflächen ferner über eine innere Fläche verbunden sind, wobei die Form im formbereiten Zustand aufweist:
- mindestens zwei Formteile, die ein geschlossenes Volumen abgrenzen, welches dem Volumen des zu formenden Streifens entspricht, wobei die Formteile Formflächen aufweisen, die die äußere Fläche, die innere Fläche und die Seitenflächen des Streifens ausbilden,
- mindestens ein erstes Reliefelement, das einen Kanal ausbilden soll, der an mindestens einer Seitenfläche des Laufstreifens mündet, und das mit mindestens einem zweiten Reliefelement zusammenwirkt, das dazu vorgesehen ist, einen Einschnitt zu formen, der zumindest an der inneren Oberfläche oder der äußeren Oberfläche des Laufstreifens mündet, um einen einzigen Ausschnitt zu formen, wobei das erste Element und das zweite Element funktionell so angeordnet sind, dass sie zusammen mindestens eine Öffnung abgrenzen, die die Kautschukmischung, die den Laufstreifen bildet, während des Vorgangs des Formens des Laufstreifens hindurchtreten lässt.

6. Formwerkzeug nach Anspruch 5, **dadurch gekennzeichnet, dass** ein erstes Reliefelement, das einen Kanal formt, der an mindestens einer Seitenfläche eines Laufstreifens mündet, mit mindestens einem zweiten Reliefelement, das einen Einschnitt formt, der an der äußeren Oberfläche des Laufstreifens mündet, und mindestens einem dritten Reliefelement zusammenwirkt, das einen Einschnitt formt, der an der inneren Oberfläche mündet, um einen einzigen Ausschnitt zu bilden, wobei die durch das zweite und dritte Reliefelement geformten Einschnitte über den Kanal miteinander verbunden sind, und dadurch, dass zumindest das zweite oder das drittes Reliefelement mit dem ersten Reliefelement funktionell so zusammenwirkt, dass mindestens eine Öffnung gebildet wird, die die Kautschukmischung hindurchtreten lassen soll, wodurch eine Verbindungsbrücke gebildet wird, die die Wände des Ausschnitts verbindet.
